# EUROPÄISCHE PATENTSCHRIFT

(11) **EP 2 167 842 B1**
(45) Veröffentlichungstag und Bekanntmachung des Hinweises auf die Patenterteilung: **15.02.2017**
(21) Anmeldenummer: 09777183.6
(22) Anmeldetag: 14.07.2009
(51) Int. Cl.: F16G 13/12

(54) **AUS EINEM D-PROFILSTAHLABSCHNITT HERGESTELLTES KETTENGLIED, INSBESONDERE FÜR EINE HEBEZEUGKETTE**
CHAIN MEMBER MADE OF A D-PROFILE STEEL SECTION, PARTICULARLY FOR A HOISTING GEAR CHAIN
MAILLON DE CHAINE FABRIQUE A PARTIR D'UN SEGMENT D'ACIER PROFILE EN D, EN PARTICULIER POUR UNE CHAINE DE LEVAGE

(30) Priorität: 23.07.2008 DE 102008034360
(43) Veröffentlichungstag der Anmeldung: 31.03.2010
(73) Patentinhaber: pewag Austria GmbH, 8605 Kapfenberg (AT)
(72) Erfinder: PENGG, Ägyd, A-9020 Klagenfurt (AT); FUCHS, Franz Alfred, A-8605 Kapfenberg (AT)
(74) Vertreter: Patentanwälte Geyer, Fehners & Partner mbB
(86) Internationale Anmeldenummer: PCT/EP2009/005114
(87) Internationale Veröffentlichungsnummer: WO 2010/009831

(56) Entgegenhaltungen:
- WO-A-03/038303
- DE-C- 939 545
- DE-U1- 20 113 284

## Beschreibung

Die Erfindung bezieht sich auf ein aus einem D-Profilstahlabschnitt hergestelltes Kettenglied, insbesondere für eine Hebezeugkette, mit einer im wesentlichen planen äußeren Umfangsfläche und zwei in diese mündende Seitenflanken, deren jede einen zur äußeren Umfangsfläche im wesentlichen senkrechten planen Flankenabschnitt aufweist, der über eine an ihn anschließende Fasenfläche mit der äußeren Umfangsfläche verbunden ist, und mit einer der Innenseite des Kettengliedes zugewandten, gerundeten, inneren Umfangsfläche.

Die Erfindung bezieht sich ferner auf aus solchen Kettengliedern bestehende Hebezeugketten.

Aus der EP 0816717 B1 ist eine Kette mit Kettengliedern aus einsatzgehärteten D-Profilstahlabschnitten bekannt, die jeweils eine im wesentlichen plane äußere Umfangsfläche aufweisen, in die zwei Seitenflanken jeweils unter Ausbildung einer scharfen Kante oder einer Rundung mit sehr kleinem Rundungsradius einmünden. Hierdurch wird eine nur sehr geringe Querschnittsverminderung des Profilquerschnitts der Kettenglieder erreicht, wodurch sich große Biegewiderstandsmomente erzielen lassen. Die Maximierung der Querschnittsfläche schlägt sich dabei vor allem in einer Erhöhung der Kettenzugkraft wie auch der Biegewiderstandsmomente nieder. Große Biegewiderstandsmomente bewirken ihrerseits aber wiederum eine hohe Schwingfestigkeit der Kette.

Die Kettenglieder der aus der EP 1 440 253 B1 bekannten Kette sind ebenfalls aus D-Profilstahlabschnitten hergestellt, der gemäß dem Oberbegriff des Anspruchs 1 ist, bei denen die Rundungen im Bereich des Übergangs zwischen den Seitenflanken und der planen Umfangsfläche mit einem Abrundungsradius ausgeführt sind, welcher gleich den 0,2- bis 0,4-fachen Wert des Abstandes zwischen den Flanken der Kettenglieder ist. Dieser gegenüber den Kettengliedern aus der erstgenannten Druckschrift größere Rundungsradius führt auch zu einer entsprechend größeren Verminderung der Querschnittsfläche des Profils des Kettengliedes und damit nicht nur zu einer gewissen Verkleinerung der Kettenzugkraft, sondern auch zur Verkleinerung der Biegwiderstandsmomente, was seinerseits eine Verkleinerung der Schwingfestigkeit der Kette ergibt.

Ausgehend hiervon liegt der Erfindung die Aufgabe zugrunde, ein Kettenglied der eingangs genannten Art zur Verfügung zu stellen, das unter Beibehaltung einer möglichst großen Querschnittsfläche und hoher Biegewiderstandmomente eine sehr gute Schwingfestigkeit der Kette ergibt.

Erfindungsgemäß wird dies bei einem Kettenglied der eingangs genannten Art dadurch erreicht, daß - im Profilquerschnitt des Kettengliedes gesehen - jede Fasenfläche als eine plane, unter einem Fasenwinkel im Bereich von 10° bis 30° schräg zum zugeordneten Flankenabschnitt in Richtung zur anderen Seitenflanke hin geneigte Fläche ausgebildet ist, die in die äußere Umfangsfläche in einem Abstand (a), dessen Größe gleich dem 0,02-fachen bis 0,15-fachen der Größe des Abstands (A) zwischen den beiden Flankenabschnitten ist, seitlich zum ersten Flankenabschnitt versetzt einmündet, und daß die Umfangsfläche halbkreisförmig verläuft und beidseits tangential in die jeweilige Seitenflanke einläuft.

Wesentliches Merkmal des erfindungsgemäßen Kettengliedes ist das Anbringen einer Fase an den Stoßflächen zwischen den Seitenflanken und der planen Außenfläche des Kettengliedes. Damit wird der Vorteil erreicht, daß eine Kette, die aus solchen Kettengliedern besteht, aufgrund dieser Fase in die Einmündungen der Kettenführungen eines Hebezeuges o.ä. besser hineingleiten kann als eine Kette mit scharfkantigem Profil oder mit einer nur sehr kleinen Abrundung im Übergangsbereich zwischen den Seitenflanken und der äußeren Umfangsfläche. Hierdurch ergibt sich eine wesentliche Verbesserung des Laufverhaltens einer solchen Kette aus erfindungsgemäßen Kettengliedern gegenüber Kettengliedern, wie sie z.B. aus der EP 0 816 717 B1 bekannt sind.

Des weiteren hat die Fase in dem der äußeren Umfangsfläche benachbarten Bereich jeder Seitenflanke auch noch den Vorteil, daß eine Kette mit solchen Kettengliedern im Kettenspeicher eines Hebezeuges o.ä. einen flacheren Schüttkegel bildet und deshalb einen kleineren Kettenspeicher bzw. Kettenbehälter benötigt. Dies läßt wiederum eine bessere Ausnützung der Hubhöhe des Hebezeuges zu.

Die Ausbildung der Fase beim erfindungsgemäßen Kettenglied bedingt nur einen sehr geringen Querschnittsverlust und damit Verlust an Biegewiderstandsmoment sowie von Bruchkraft und Schwingfestigkeit, verglichen mit dem Fall eines Kettengliedes mit scharfkantigem Profil. Dabei ist es für den Fachmann kein Problem, die eingesetzte Fasengröße und den Profilflächenverlust zueinander in einem besonders günstigen Verhältnis zu halten.

Eine vorteilhafte Ausgestaltung des erfindungsgemäßen Kettengliedes besteht auch darin, dessen Seitenflanken relativ zu einer Höhenmittelachse des Kettengliedes symmetrisch anzuordnen.

Ferner ist es bevorzugt, wenn bei einem erfindungsgemäßen Kettenglied jeweils der unmittelbare Übergangsbereich zwischen dem ersten Flankenabschnitt einer Seitenflanke sowie der anschließenden geneigten Fasenfläche und/oder zwischen letzterer und der äußeren planen Umfangsfläche gerundet ausgebildet wird, wobei, erneut bevorzugt, jeweils eine Rundung mit gleich großem Rundungsradius vorgesehen ist, dessen Größe vorteilhafterweise gleich dem 0,04-fachen bis 0,1-fachen der Größe des Abstandes zwischen den beiden ersten Flankenabschnitten des Kettengliedes ist.

Die Erfindung bezieht sich ferner auf aus solchen erfindungsgemäßen Kettengliedern hergestellte Hebezeugketten.

Ketten aus solchen erfindungsgemäßen Kettengliedern haben ein hervorragendes Laufverhalten beim Einlauf in die Kettenführungen von Hebezeugen, gerade auch bei leichtem seitlichen Versatz der Kettenglieder zum Einlaufbereich gezeigt und gestatten das Aufbringen hoher Kettenzugkräfte. Gleichzeitig lassen sich hohe Biegewiderstandsmomente wie auch eine sehr gute Schwingfestigkeit bei den Ketten aus erfindungsgemäßen Kettengliedern feststellen

Die Erfindung wird nachfolgend anhand der Zeichnung im Prinzip beispielshalber noch näher erläutert. Es zeigen:
- **Fig. 1**: den D-Profilquerschnitt eines erfindungsgemäßen Kettengliedes durch die Mitte eines seiner Seitenschenkel, wobei die Schnittebene senkrecht durch die Mittellinie des Seitenschenkels entsprechend Schnittlage I-I gemäß Fig. 2 liegt;
- **Fig. 2**: einen Schnitt durch einen Abschnitt eines Kettenstrangs mit drei erfindungsgemäßen Kettengliedern, wobei die Schnittebene durch die Mitte der beiden Längsschenkel des aufgerichtet dargestellten Kettengliedes verläuft;
- **Fig. 3**: einen Schnitt entsprechend Fig. 2, wobei hier jedoch die in das mittlere Kettenglied eingehängten seitlichen Kettenglieder jeweils um 40° zum mittleren Kettenglied geneigt sind;
- **Fig. 4**: **eine perspektivische Darstellung des Kettenstrangabschnittes aus** **Fig. 2****, und**
- **Fig. 5**: eine rein prinzipielle Darstellung zum Einlaufen eines erfindungsgemäßen Kettengliedes in die Führungsrille der Kettenführung eines Kettenrades.

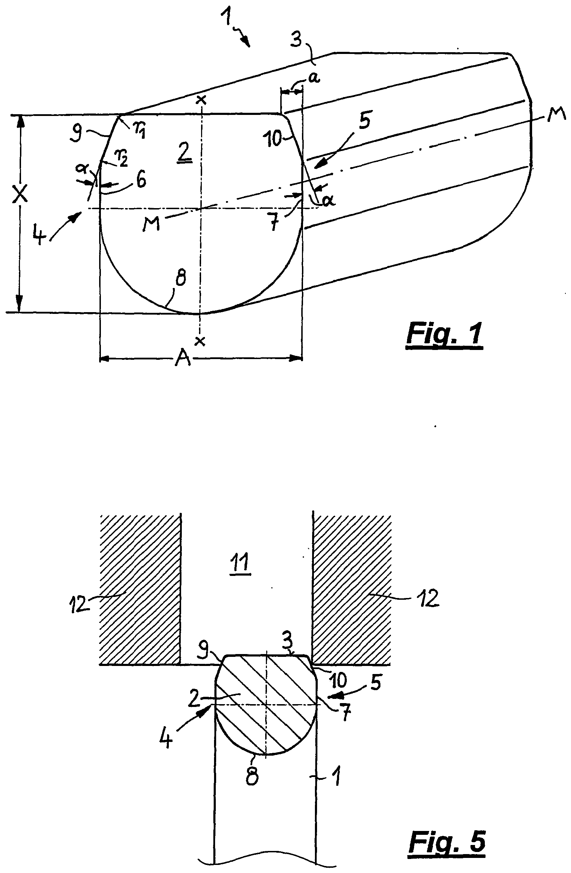

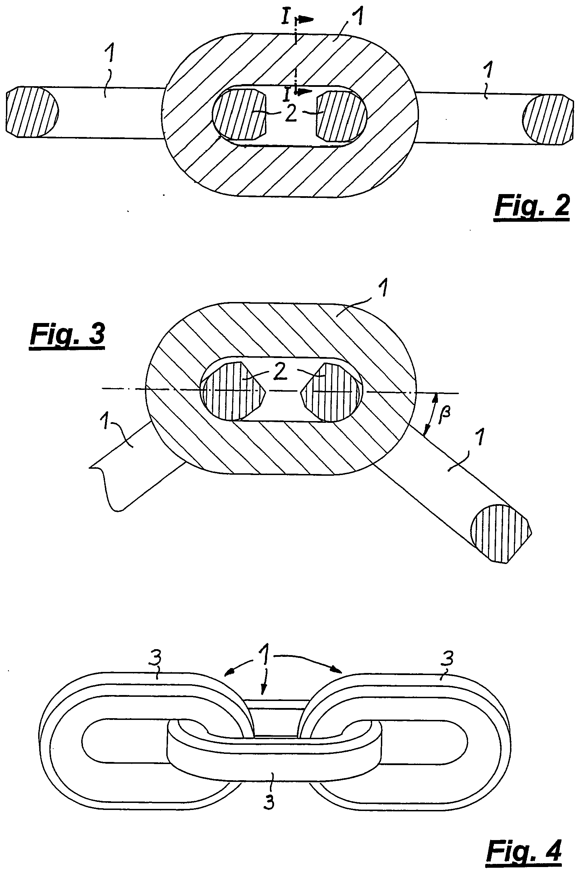

Fig. 1 zeigt einen Abschnitt eines Seitenschenkels eines einsatzgehärteten Kettengliedes 1 in einer perspektivischen Darstellung. Dieser Seitenschenkelabschnitt des Kettengliedes 1 weist eine Längsmittellinie M-M auf und ist an seinem vorderen, dem Betrachter zugewandten Ende in einer Schnittebene, die senkrecht zu der Längsmittellinie M-M liegt, geschnitten, wobei die Schnittfläche einen D-Profilquerschnitt 2 ausbildet. Die Schnittlage der Fig. 1 entspricht der in Fig. 2 angegebenen Schnittlage I-I.

Das Kettenglied 1 weist eine plane äußere Umfangsfläche 3, zwei Seitenflanken 4, 5, die beide in die äußere Umfangsfläche 3 einmünden, sowie eine der Innenseite des Kettengliedes zugewandte, innere, gerundete Umfangsfläche 8 auf. Die Umfangsfläche 8 ist, wie Fig. 1 zeigt, im Querschnitt halbkreisförmig ausgebildet und läuft an jeder Seite tangential in die jeweilige Seitenflanke 4 bzw. 5 ein.

Jede der Seitenflanken 4 und 5 umfaßt ihrerseits einen von der äußeren Umfangsfläche 3 beabstandeten planen Flankenabschnitt 6 bzw. 7 auf. Diese Flankenabschnitte 6 und 7 verlaufen, im Querschnitt 2 der Fig. 1 gesehen, parallel zueinander und im wesentlichen senkrecht zur planen äußeren Umfangsfläche 3.

An jeden dieser Flankenabschnitte 6, 7 schließt sich dann, in Richtung zur äußeren Umfangsfläche 3 gesehen, eine ebenfalls plan ausgebildete Fasenfläche 9 bzw. 10 an, die unter einem Fasenwinkel α zum zugehörigen Flankenabschnitt 6 bzw. 7 in Richtung zu der gegenüberliegenden Seitenflanke 4 bzw. 5 hin geneigt verläuft.

Die beiden Flankenabschnitte 6 und 7 sind im Profil-Querschnitt 2 voneinander um einen Abstand ***A*** entfernt.

Der Querschnitt 2 in Fig. 1 weist eine Höhenmittellinie *x*-*x* auf, zu der nicht nur die beiden Seitenflanken 4 und 5, sondern die ganze Querschnittsgestaltung symmetrisch angeordnet ist.

Die Gesamthöhe (in Richtung der Höhenmittellinie *x-x* gemessen) beträgt *X .*

Wie die Darstellung der Fig. 1 ferner zeigt, ist jeweils der Übergangsbereich zwischen den Flankenabschnitten 6 bzw. 7 sowie den anschließenden Fasenflächen 9 bzw. 10 gerundet mit einem Rundungsradius *r₂* ausgeführt.

Auch jede der beiden Fasenflächen 9 und 10 mündet ihrerseits über einen gerundet ausgebildeten Übergangsbereich (mit einem Rundungsradius *r₁*) in die äußere Umfangsfläche 3 ein.

Die beiden Radien *r*₁ sowie *r*₂ können nach Wunsch ausgeführt werden, sind aber beide bevorzugt gleich groß, somit *r*₁ = *r₂* . Ganz bevorzugt wird die Größe dieser Radien jedoch gleich den 0,04-fachen bis zum 0,1-fachen der Größe des Abstandes A zwischen den beiden ersten Flankenabschnitten 6 und 7 des Kettengliedes 1 gewählt.

Wie aus Fig. 1 ferner ersichtlich ist, münden die Fasenflächen 9 bzw. 10, im Querschnitt 2 gesehen, jeweils seitlich um einen Abstand a von den Flankenabschnitten 6 bzw. 7 in Richtung zur jeweils gegenüberliegenden Seitenflanke 4 bzw. 5 hin seitlich versetzt in die äußere Umfangsfläche 3 ein. Dieser Abstand a wird bevorzugt so gewählt, daß er gleich dem 0,02-fachen bis zum 0,15-fachen der Größe des Abstandes A zwischen den beiden ersten Flankenabschnitten 6 und 7 beträgt.

Der Fasenwinkel **α** ist bevorzugt so gewählt, daß seine Größe im Bereich von 10° bis 30° liegt. Auch wenn bevorzugt für die Neigung der Fasenflächen 9 und 10 ein gleich großer Fasenwinkel **α** eingesetzt wird, kann es jedoch auch Anwendungsfälle geben, bei denen die Fasenfläche 9 unter einem etwas anderen Fasenwinkel als die Fasenfläche 10 geneigt verläuft. Dabei kann die Lage jeder der beiden Fasenflächen 9 und 10 dennoch so gewählt werden, falls gewünscht, daß beide unter einem gleich großen seitlichen Abstand a zum entsprechenden Flankenabschnitt 6 bzw. 7 seitlich versetzt in die äußere Umfangsfläche 3 einmünden.

Fig. 2 zeigt einen Kettenstrangabschnitt mit in Längsrichtung jeweils um 90° zueinander verdreht angeordneten Kettengliedern 1, wobei die Schnittebene hier durch die beiden Mittellinien der Seitenschenkel des in der zeichnerischen Darstellung stehenden Kettengliedes 1 verläuft. In Fig. 2 ist auch die Lage der Schnittebene *I-I* für die Darstellung aus Fig. 1 angegeben.

Während in Fig. 2 die Kettenglieder 1 des gezeigten Kettenstranges in Längsrichtung des Kettenstranges zueinander geradlinig ausgerichtet sind, zeigt Fig. 3 eine Schnittdarstellung eines Kettengliedes 1 mit zwei in dieses eingehängten seitlichen Kettengliedern 1, die jedoch unter einem Winkel von 40° zu ihm angewinkelt liegen.

Aus der Lage der Querschnitte 2, wie sie in Fig. 3 dargestellt ist, ist ersichtlich, daß die Querschnitte 2 infolge der Fasenflächen 9 und 10 auch problemfrei innerhalb der Aufnahmeweite des Kettengliedes 1 verdreht werden können.

Fig. 4 zeigt schließlich in einer perspektivischen Darstellung einen Kettenstrangabschnitt mit erfindungsgemäßen Kettengliedern 1.

Die Darstellung der Fig. 5 stellt nur ganz prinzipiell den Zustand beim Einlauf eines erfindungsgemäßen Kettengliedes 1 in die Führungsrille 11 einer Kettenführung 12 eines Hebezeuges dar.

Aufgrund der einlaufseitig angebrachten schrägen Fasenflächen 9 bzw. 10 (in Fig. 5 wesentlich: Fasenfläche 10) kann das Kettenglied 1 (und damit auch die Kette) an der Einmündestelle in die Führungsrille 11 der Kettenführung 12 des Hebezeuges auch bei leichtem seitlichen Versatz gut hineingleiten, was bei einer Kette mit scharfkantigem Profil schwieriger ist, wodurch eine wesentliche Verbesserung des Laufverhaltens einer solchen Kette gegenüber Ketten mit Kettengliedern, bei denen der Übergangsbereich zwischen der Seitenflanke und der äußeren Umlauffläche 3 scharfkantig oder nur mit einer sehr kleinen Abrundung versehen ist, eintritt.

## Patentansprüche

1. Aus einem D-Profilstrahlabschnitt hergestelltes Kettenglied (1), insbesondere für eine Hebezeugkette, mit einer im wesentlichen planen äußeren Umfangsfläche (3), zwei in diese mündenden Seitenflanken (4, 5), deren jede einen zur äußeren Umfangsfläche (3) im wesentlichen senkrechten planen Flankenabschnitt (6, 7) aufweist, der über eine an ihn anschließende Fasenfläche (9, 10) mit der äußeren Umfangsfläche (3) verbunden ist, und mit einer der Innenseite des Kettengliedes (1) zugewandten, gerundeten, inneren Umfangsfläche *(8), **dadurch gekennzeichnet, daß*** - im Profilquerschnitt des Kettengliedes (1) gesehen - jede Fasenfläche (9, 10) als eine plane, unter einem **Fasenwinkel** (*α*) im Bereich von 10° bis 30° schräg zum zugeordneten Flankenabschnitt (6, 7) in Richtung zur anderen Seitenflanke (4,5) hin geneigte Fläche ausgebildet ist, die in die äußere Umfangsfläche (3) in einem Abstand (a), dessen Größe gleich dem 0,02-fachen bis 0,15-fachen der Größe des Abstands (A) zwischen den beiden Flankenabschnitten (6, 7) ist, seitlich zum ersten Flankenabschnitt (6, 7) versetzt einmündet, und daß die innere Umfangsfläche (8) halbkreisförmig verläuft und beidseits tangential in die jeweilige Seitenflanke (4, 5) einläuft.

2. Kettenglied nach Anspruch 1, **dadurch gekennzeichnet, daß** die Seitenflanken (4, 5) zu einer Höhenmittelachse (H-H) des Kettengliedes (1) symmetrisch angeordnet sind.

3. Kettenglied nach Anspruch 1 oder 2, **dadurch gekennzeichnet, daß** jeweils der Übergangsbereich zwischen dem Flankenabschnitt (6, 7) sowie der anschließenden Fasenfläche (9, 10) und/oder letzterer und der äußeren Umfangsfläche (3) gerundet (r₁, r₂) ausgebildet ist.

4. Kettenglied nach Anspruch 3, **dadurch gekennzeichnet, daß** der Übergangsbereich zwischen jeder Fasenfläche (9, 10) und äußerer Umfangsfläche (3) mit einem Rundungsradius (r₁) ausgebildet ist, dessen Größe gleich dem 0,04-fachen bis 0,1-fachen der Größe des Abstandes (A) zwischen den beiden Flankenabschnitten (6, 7) des Kettengliedes (1) ist.

5. Aus Kettengliedern nach einem der Ansprüche 1 bis 4 bestehende Hebezeug-Lastkette.

## Claims

1. Chain member (1) made of a D-profile steel section, particularly for a hoisting gear chain, having a substantially planar outer circumferential surface (3), two lateral flanks (4, 5) opening into it, each of which having a planar flank section (6, 7) substantially perpendicular to the outer circumferential surface (3), said flank section being connected to the outer circumferential surface (3) by way of a bevelled surface (9, 10) adjacent to it, and to a rounded inner circumferential surface (8) directed towards the inside of the chain member (1), ***characterised in that*** - seen in the profile cross-section of the chain member (1) - each bevelled surface (9, 10) is formed as a planar surface at a bevel angle (α) ranging between 10° and 30° obliquely inclined towards the associated flank section (6, 7) in the direction of the other lateral flank (4, 5), said surface opening, laterally offset to the first flank section (6, 7), into the outer circumferential surface (3) at a distance (a), the size of which is equal to 0.02 times to 0.15 times the size of the distance (A) between the two flank sections (6, 7), and **in that** the inner circumferential surface (8) extends semicircularly and runs tangentially into the respective lateral flank (4, 5) on both sides.

2. Chain member according to claim 1, **characterised in that** the lateral flanks (4, 5) are arranged symmetrically to a height of the central axis (H-H) of the chain member (1).

3. Chain member according to claim 1 or 2, **characterised in that** in each case the transition region between the flank section (6, 7) and the adjacent bevelled surface (9, 10) and/or the latter and the outer circumferential surface (3) is rounded (r₁, r₂).

4. Chain member according to claim 3, **characterised in that** the transition region between each bevelled surface (9, 10) and the outer circumferential surface (3) is formed with a radius of curvature (r₁), the size of which is equal to 0.04 times to 0.1 times the size of the distance (A) between the two flank sections (6, 7) of the chain member (1).

5. Hoisting gear load chain consisting of chain members according to one of claims 1 to 4.

## Revendications

1. Maillon de chaîne (1) fabriqué à partir d'un segment d'acier profilé en D, en particulier pour une chaîne d'engin de levage, avec une surface périphérique extérieure (3) essentiellement plane, deux flancs latéraux (4, 5), débouchant dans celle-ci, dont chacun présente une section de flanc (6, 7) plane, essentiellement perpendiculaire à la surface périphérique extérieure (3), qui est raccordée à la surface périphérique extérieure (3) par le biais d'une surface chanfreinée (9, 10) raccordée à la section, et avec une surface périphérique intérieure (8) arrondie tournée vers le côté intérieur du maillon de chaîne (1), ***caractérisé en ce que*** - vu dans la section transversale de profilé du maillon de chaîne (1) - chaque surface chanfreinée (9, 10) est constituée en tant que surface plane inclinée en direction de l'autre flanc latéral (4, 5) en formant un angle de chanfrein (α) dans la plage de 10° à 30° de façon oblique par rapport à la section de flanc (6, 7) affectée, surface plane qui débouche dans la surface périphérique extérieure (3) à une distance (a) dont la grandeur est égale à 0,02 fois à 0,15 fois la grandeur de la distance (A) entre les deux sections de flanc (6, 7), de façon décalée latéralement par rapport à la première section de flanc (6, 7), et **en ce que** la surface périphérique intérieure (8) est en forme de demi-cercle et entre des deux côtés tangentiellement dans le flanc latéral (4, 5) respectif.

2. Maillon de chaîne selon la revendication 1, **caractérisé en ce que** les flancs latéraux (4, 5) sont disposés symétriquement à un axe médian de hauteur (H-H) du maillon de chaîne (1).

3. Maillon de chaîne selon la revendication 1 ou 2, **caractérisé en ce que** respectivement la zone de transition entre la section de flanc (6, 7) ainsi qu'entre la surface chanfreinée (9, 10) qui suit et/ou cette dernière et la surface périphérique extérieure (3) est constituée de façon arrondie (r₁, r₂).

4. Maillon de chaîne selon la revendication 3, **caractérisé en ce que** la zone de transition entre chaque surface chanfreinée (9, 10) et la surface périphérique extérieure (3) est constituée avec un rayon d'arrondi (r₁) dont la grandeur est égale à 0,04 fois à 0,1 fois la grandeur de la distance (A) entre les deux sections de flanc (6, 7) du maillon de chaîne (1).

5. Chaîne de charge pour engin de levage composée de maillons de chaîne selon l'une des revendications 1 à 4.
